# EUROPÄISCHE PATENTSCHRIFT

(11) **EP 1 180 859 B1**
(45) Veröffentlichungstag und Bekanntmachung des Hinweises auf die Patenterteilung: **18.04.2007**
(21) Anmeldenummer: 01116830.9
(22) Anmeldetag: 10.07.2001
(51) Int. Cl.: H04B 10/17

(54) **Bidirektionaler optischer Verstärker**
Bidirectional optical amplifier
Amplificateur optique bidirectionnel

(30) Priorität: 16.08.2000 DE 10039950
(43) Veröffentlichungstag der Anmeldung: 20.02.2002
(73) Patentinhaber: SIEMENS AKTIENGESELLSCHAFT, 80333 München (DE)
(72) Erfinder: Rapp, Lutz, Dr., 82041 Deisenhofen (DE)

(56) Entgegenhaltungen:
- EP-A- 0 729 248
- US-A- 5 280 549
- BARNARD C W ET AL: "BIDIRECTIONAL FIBER AMPLIFIERS" IEEE PHOTONICS TECHNOLOGY LETTERS, IEEE INC. NEW YORK, US, Bd. 4, Nr. 8, 1. August 1992 (1992-08-01), Seiten 911-913, XP000293633 ISSN: 1041-1135

## Beschreibung

Die Erfindung betrifft einen bidirektionalen optischen Verstärker nach dem Oberbegriff des Patentanspruchs 1 oder des Patentanspruchs 4.

Bei optischen Übertragungssystemen mit bidirektionaler Übertragung von Datensignalen über eine Faser sind bidirektionale optische Verstärker erforderlich.

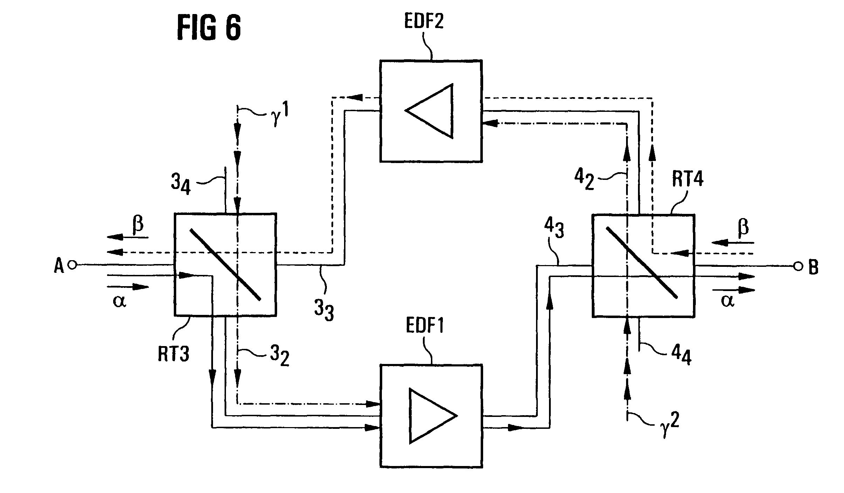

In "Erbium-Doped Fiber Amplifiers" von Emmanuel Disurvire, Verlag John Wiley & Sons, Inc. NY, 1994, Seiten 462 bis 465 sind verschiedene bidirektionale optische Faserverstärker beschrieben. Um einen Faserverstärker in Richtung des Datensignals zu pumpen (Fig. 6.7) ist dem Faserverstärker ein wellenlängenselektiver Koppler vorgeschaltet. Dies hat jedoch zur Folge, daß das Rauschverhalten durch Dämpfung des Nutzsignals verschlechtert wird. In einer anderen Variante (Seite 465, Figur 6.8) wird entgegen der Signalrichtung gepumpt, was wiederum grundsätzlich zu schlechteren Rauschverhältnissen führt, da ein durch die Verstärkerfaser gedämpftes Pumpsignal am Verstärkereingang vorhanden ist.

Aus der US-Patentschrift 5,280,549 und der Veröffentlichung von C. W. Barnard et al.: "Bidirectional Fiber Amplifiers", IEEE Photonics Technology Letters, Bd. 4, Nr. 8, August 1992, Seiten 911-913 sind weitere Varianten eines bidirektionalen Verstärkers bekannt, bei denen die gegenläufigen Signale auf zwei Verstärkerzweige aufgeteilt, verstärkt und anschließend wieder zusammengefasst werden. Die in den einzelnen Verstärkerzweigen angeordneten Verstärker werden entweder entgegen der Signalrichtung gepumpt oder über einen der Verstärkungsfaser vorgeschalteten Koppler. In beiden Fällen wird das Pumpsignal vor dem Verstärkereingang gedämpft.

Aufgabe der Erfindung ist es daher, einen bidirektionalen Verstärker mit besserem Rauschverhältnis anzugeben.

Diese Aufgabe wird durch bidirektionale Verstärker gemäß den unabhängigen Ansprüchen 1 oder 4 gelöst.

Vorteilhafte Weiterbildungen sind in den abhängigen Ansprüchen angegeben.

Eine Verbesserung des Rauschverhaltens wird dadurch erreicht, daß das optische Nutzsignal und das Pumpsignal die gleiche Ausbreitungsrichtung haben und keine zusätzlich Dämpfung der Eingangs-Nutzsignale der Faserverstärker durch Einkoppeleinrichtungen für das jeweilige Pumpsignal erfolgt.

Ausführungsbeispiele werden anhand von Figuren näher erläutert.

Es zeigen:
Figur 1 das Prinzipschaltbild eines bidirektionalen Verstärkers mit einem optischen Richtungstrenner,
Figur 2 zeigt den Aufbau eines ersten Richtungstrenners und
Figur 3 die Durchlass- und Sperrbereiche dieses Richtungstrenners,
Figur 4 den Aufbau eines zweiten Richtungstrenners und
Figur 5 die Durchlass- und Sperrbereiche dieses Richtungstrenners,
Figur 6 zeigt eine Variante eines bipolaren Verstärkers.

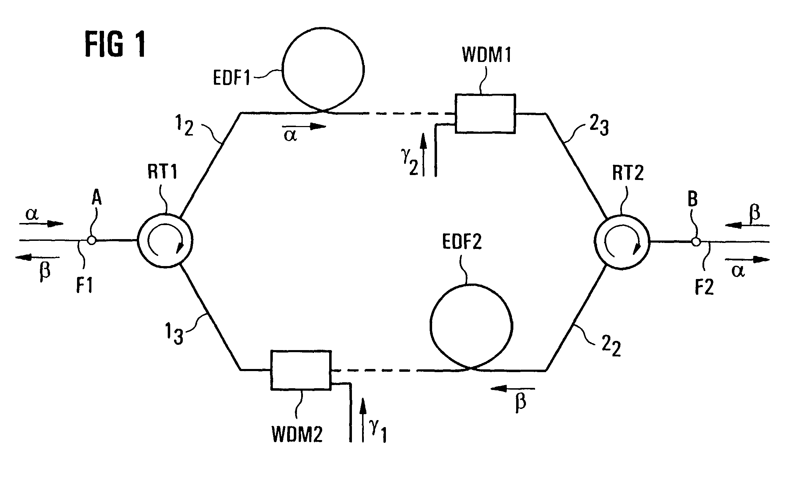

Der in **Figur 1** dargestellte bidirektionale Verstärker weist zwei Anschlüsse A und B auf. An den Anschluß A ist ein erster Faserabschnitt F1 und an den zweiten Anschluß B ist ein zweiter Abschnitt F2 der Übertragungsfaser angeschaltet. Der Anschluß A entspricht einem ersten Anschluß eines ersten als Dreitor ausgeführten Richtungstrenners RT1. An diesem Anschluß wird ein erstes optisches Nutzsignal α eingespeist, das am zweiten Anschluß 1₂ abgegeben wird und in einem ersten Verstärkerzweig, der einen ersten Faserverstärker EDF1 mit einem nachgeschalteten Wellenlängenmultiplexer (Einspeiseeinrichtung) WDM1 umfaßt, verstärkt wird.

Das verstärkte Nutzsignal wird einen Anschluß 2₃ eines zweiten Richtungstrenners RT2 zugeführt und über dessen ersten Anschluß B abgegeben. Über diesen Anschluß wird ein zweites optisches Signal β eingespeist, das am zweiten Anschluß 2₂ des Richtungstrenners RT2 der Reihenschaltung eines zweiten Faserverstärkers EDF2 und eines zweiten Wellenlängenmultiplexers WDM2 zugeführt wird und über einen dritten Anschluß 1₃ des ersten Richtungstrenners RT1 am Anschluß A abgegeben wird. Als Richtungstrenner werden Filteranordnungen verwendet. Es können Reflektionsfilter eingesetzt werden, wenn für beide Übertragungsrichtungen unterschiedliche Wellenlängenbereiche verwendet werden. Die Pumpsignale γ1 und γ2, die aus einer oder mehreren Quellen stammen können, werden über die Wellenlängenmultiplexer eingespeist. Das erste Pumpsignal γ1 wird über den zweiten Wellenlängenmultiplexer WDM2 und den ersten Richtungstrenner RT1 codirektional zur Übertragungsrichtung des optischen Signals α eingespeist. Das optische Signal α muß bei dieser Anordnung keinen Wellenlängenmultiplexer durchlaufen, so daß durch diesen keine Dämpfung des Nutzsignals erfolgt und der Rauschabstand nicht verschlechtert wird. In der selben Weise wird der zweite Faserverstärker EDF2 vom Pumpsignal γ2 über den ersten Wellenlängenmultiplexer WDM1 und den zweiten Richtungstrenner RT2 gepumpt. Vergleicht man die Richtungstrenner mit Zirkulatoren, so haben sie für das Pumpsignal einen anderen Richtungssinn als für die Nutzsignale. Anstelle der Wellenlängenmultiplexer können prinzipiell auch optische Koppler eingesetzt werden, die jedoch eine höhere Dämpfung aufweisen.

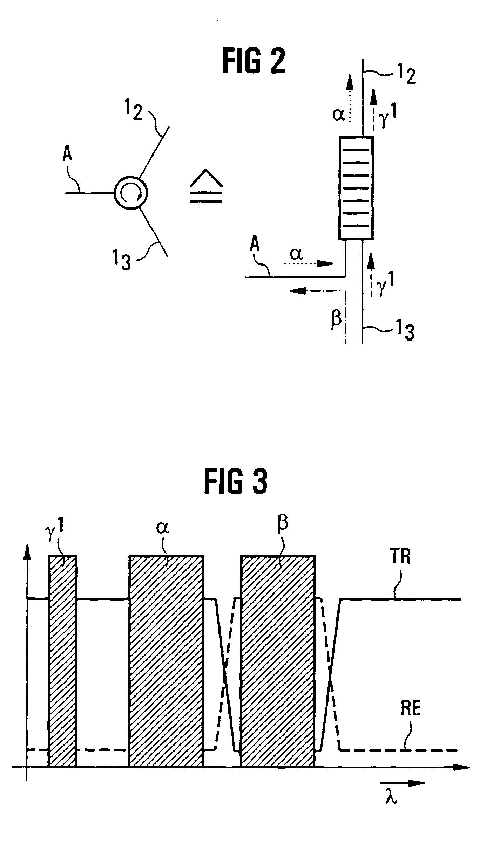

In **Figur 2** zeigt die prinzipielle Ausführung des ersten Richtungstrenners RT1 als Reflektionsfilter. Das an Anschluß A anliegende optische Signal α wird nicht reflektiert, sondern am Ausgang 1₂ abgegeben. Dagegen wird das dem Anschluß 1₃ zugeführte Nutzsignal β durch das Reflektionsfilter reflektiert und am Anschluß A abgegeben, während das Pumpsignal γ1 nicht reflektiert und zusammen mit dem optischen Nutzsignal am Anschluß 1₂ abgegeben und dem Faserverstärker EDF1 zugeführt wird.

In **Figur 3** ist die Übertragungsfunktion des Filters als Funktion der Wellenlänge λ dargestellt. Zur Verdeutlichung ist außer der Übertragungsfunktion TR (Transmission) die Dämpfung bzw. Refexion (RE) dargestellt. Die Signale α, β und γ1 sind als Balken dargestellt.

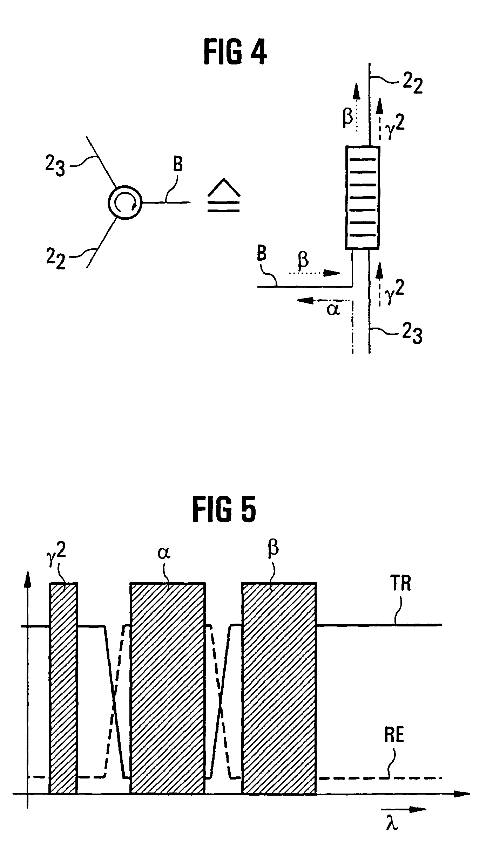

**Figur 4** zeigt die prinzipielle Ausführung des zweiten Richtungstrenners RT2 als Reflektionsfilter und **Figur 5** die zugehörige Übertragungsfunktion.

**Figur 6** zeigt eine Variante des bidirektionalen Verstärkers, der keinen Wellenlängenmuliplexer im Signalweg enthält. Anstelle der als 3-Tor ausgeführten wellenlängenselektiven Richtungstrenner werden 4-Tor-Richtungstrenner RT3 und RT4 eingesetzt. Die optischen Nutzsignale α, β werden ohne große Dämpfung in der dargestellten Weise von den 4-Tor-Richtungstrennern wie im Ausführungsbeispiel Figur 1 durchgeschaltet.

Jeder 4-Tor-Richtungstrenner weist einen vierten Anschuß 3₄ bzw.4₄ auf. Über diese können die Verstärker EDF1 und EDF2 gepumpt werden, ohne daß hierzu zusätzliche Einspeiseeinrichtungen (Wellenlängenmultiplexer) im Signalweg erforderlich sind. Dämpfungsverluste der Nutzsignale werden hierdurch vermieden. Die 4-Tor-Richtkoppler können beispielsweise nach dem Strahlteilerprinzip realisiert werden. Dieses Prinzip ist aus "Optisch Nachrichtentechnik - eine Einführung" von G. Grau, W. Freude, 3. Auflage, Seiten 282 und 283 bekannt.

Aus schaltungstechnischen Gründen notwendige Elemente wie optische Isolatoren usw. sind im Prinzipschaltbild nicht dargestellt. Bei mehrstufigen Verstärkern sollte zumindest die erste Verstärkerstufe auch in Richtung des optischen Nutzsignals gepumpt werden.

## Patentansprüche

1. Bidirektionaler optischer Verstärker mit einem ersten Richtungstrenner (RT1), an dessen erstem Anschluß (A) ein erster Faserabschnitt (F1) angeschaltet wird,
mit einem zweiten Richtungstrenner (RT2), an dessen erstem Anschluß (B) ein zweiter Faserabschnitt (F2) der Übertragungsfaser (F1, F2) angeschaltet wird,
mit einem ersten einen Faserverstärker (EDF1) aufweisenden Verstärkerzweig, der zwischen einen zweiten Anschluß (1₂) des ersten Richtungstrenners (RT1) und einem dritten Anschluß (2₃) des zweiten Richtungstrenners (RT2) angeordnet ist und ein dem ersten Anschluß (A) des ersten Richtungstrenners (RT1) zugeführtes erstes optisches Nutzsignal (α) verstärkt, das dann über den ersten Anschluß (B) des zweiten Richtungstrenner (RT2) in den zweiten Faserabschnitt (F2) eingespeist wird,
und mit einem zweiten Verstärkerzweig, der zwischen einem zweiten Anschluß (2₂) des zweiten Richtungstrenners (RT2) und einem dritten Anschluß (1₃) des ersten Richtungstrenners (RT1) angeordnet ist und einen zweiten Faserverstärker (EDF2) enthält, der ein zweites dem ersten Anschluß (B) des zweiten Richtungstrenners (RT2) zugeführtes optisches Nutzsignal (β) verstärkt, das dann über den ersten Anschluß (A) des ersten Richtungstrenners (RT1) in den ersten Faserabschnitt (F1) eingespeist wird,
und mit Einspeiseeinrichtungen (WDM1, WDM2) zum Einkoppeln von Pumpsignalen (γ1, γ2),
**dadurch gekennzeichnet,**
**daß** den Faserverstärkern (EDF1, EDF2) jeweils eine der Einspeiseeinrichtungen (WDM1, WDM2) nachgeschaltet ist und
**daß** über den am Ausgang der Einspeiseeinrichtung (WDM1, WDM2) angeschalteten Richtungstrenner (RT2, RT1) jeweils der Faserverstärker (EDF2, EDF1) im anderen Verstärkerzweig in Vorwärtsrichtung entlang des Signalwegs des zu verstärkenden optischen Nutzsignals (α,β) gepumpt wird.

2. Bidirektionaler optischer Verstärker nach Anspruch 1, ist, daß das jeweilige Pumpsignal (γ1, γ2) im Gegensatz zu dem verstärkten optischen Nutzsignal in den anderen Verstärkerzweig eingekoppelt wird.

3. Bidirektionaler optischer Verstärker nach Anspruch 1 oder 2,
**dadurch gekennzeichnet,**
**daß** als Einspeiseeinrichtung ein Wellenlängenmultiplexer vorgesehen ist.

4. Bidirektionaler optischer Verstärker mit einem ersten 4-Tor-Richtungstrenner (RT3), an dessen erstem Anschluß (A) ein erster Faserabschnitt (F1) angeschaltet wird,
mit einem zweiten 4-Tor-Richtungstrenner (RT4), an dessen erstem Anschluß (B) ein zweiter Faserabschnitt (F2) angeschaltet wird,
mit einem ersten Faserverstärker (EDF1), der zwischen einen zweiten Anschluß (3₂) des ersten 4-Tor-Richtungstrenners (RT3) und einem dritten Anschluß (2₃) des zweiten 4-Tor-Richtungstrenners (RT4) angeordnet ist und ein dem ersten Anschluß (A) des ersten 4-Tor-Richtungstrenner (RT3) zugeführtes erstes optisches Nutzsignal (α) verstärkt, das dann über den ersten Anschluß (B) des zweiten 4-Tor-Richtungstrenners (RT4) in den zweiten Faserabschnitt (F2) eingespeist wird,
mit einem zweiten Faserverstärker (EDF2), der zwischen einem zweiten Anschluß (4₂) des zweiten 4-Tor-Richtungstrenner (RT4) und einem dritten Anschluß (3₃) des ersten 4-Tor-Richtungstrenner (RT3) angeordnet ist, der ein zweites dem ersten Anschluß (B) des zweiten 4-Tor-Richtungstrenner (RT4) zugeführtes optisches Nutzsignal (β) verstärkt, das dann über den ersten Anschluß (A) des ersten 4-Tor-Richtungstrenner (RT3) in den ersten Faserabschnitt (F1) eingespeist wird,
und mit vierten Anschlüssen (3₄, 4₄) der 4-Tor-Richtungstrenner (RT3, RT4), in die Pumpsignale (γ1, γ2) eingespeist werden,
**dadurch gekennzeichnet,**
**daß** jeweils in die vierten Anschlüsse der 4-Tor-Richtungstrenner (RT3, RT4) ein Pumpsignal (γ₁, γ₂) derart eingespeist wird, dass es jeweils in Richtung des optischen Nutzsignals (α, β) in den Faserverstärker (EDF1, EDF2) eingekoppelt wird und diesen in Vorwärtsrichtung entlang des Signalwegs des zu verstärkenden optischen Nutzsignals (α, β) pumpt.

5. Bidirektionaler optischer Verstärker nach Anspruch 3,
**dadurch gekennzeichnet,**
**daß** 4-Tor-Richtungstrenner (RT3, RT4) nach dem Strahlteilerprinzip mit jeweils einem vierten Anschluß (3₄, 4₄) vorgesehen sind, über den die Pumpsignale (γ1, y2) die Faserverstärker (EDF1, EDF2) jeweils in Richtung des optischen Datensignals (α, β) pumpen.

6. Bidirektionaler optischer Verstärker nach einem der vorhergehenden Ansprüche,
**dadurch gekennzeichnet,**
**daß** mehrstufige Faserverstärker (EDF1, EDF2) vorgesehen sind, die zusätzlich entgegen der Übertragungsrichtung des optischen Nutzsignal (α, β) gepumpt werden.

## Claims

1. Bidirectional optical amplifier having a first direction separator (RT1), to whose first connection (A) a first fiber section (F1) is connected,
having a second direction separator (RT2), to whose first connection (B) a first fiber section (F2) of the transmission fibers (F1, F2) is connected,
having a first amplifier path, which has a fiber amplifier (EDF1), is arranged between a second connection (1₂) of the first direction separator (RT1) and a third connection (2₃) of the second direction separator (RT2) and amplifies a first optical user signal (α) which is supplied to the first connection (A) of the first direction separator (RT1), which is then fed in via the first connection (B) of the second direction separator (RT2) to the second fiber section (F2),
and having a second amplifier path, which is arranged between a first connection (2₂) of the second direction separator (RT2) and a third connection (1₃) of the first direction separator (RT1) and contains a second fiber amplifier (EDF2), which amplifies a second optical user signal (β), which is supplied to the first connection (B) of the second direction separator (RT2) and is then fed to the first fiber section (F1) via the first connection (A) of the first direction separator (RT1),
and having feed devices (WDM1, WDM2) for inputting pump signals (γ1, γ2),
**characterized**
**in that** the fiber amplifiers (EDF1, EDF2) are respectively followed by one of the feed devices (WDM1, WDM2), and
**in that**, via the direction separator (RT2, RT1) which is connected to the output of the feed device (WDM1, WDM2), the respective fiber amplifier (EDF2, EDF1) in the other amplifier path is pumped in the forward direction along the signal path of the optical payload signal (α, β) to be amplified.

2. Bidirectional optical amplifier according to Claim 1,
**characterized**
**in that** the direction separator (RT1, RT2) is in the form of a filter such that the respective pump signal (γ1, γ2) is fed, rather than the amplified optical user signal, into the other amplifier path.

3. Bidirectional optical amplifier according to Claim 1 or 2,
**characterized**
**in that** a wavelength multiplexer is provided as the feed device.

4. Bidirectional optical amplifier having a first four-port direction separator (RT3) to whose first connection (A) a first fiber section (F1) is connected,
having a second four-port direction separator (RT4), to whose first connection (B) a second fiber section (F2) is connected,
having a first fiber amplifier (EDF1), which is arranged between a second connection (3₂) of the first four-port direction separator (RT3) and a third connection (2₃) of the second four-port direction separator (RT4) and amplifies a first optical user signal (α) which is supplied to the first connection (A) of the first four-port direction separator (RT3) and is then fed via the first connection (B) of the second four-port direction separator (RT4) to the second fiber section (F2),
having a second fiber amplifier (EDF2), which is arranged between a second connection (4₂) of the second four-port direction separator (RT4) and a third connection (3₃) of the first four-port direction separator (RT3) and amplifies a second optical user signal (β), which is supplied to the first connection (B) of the second four-port direction separator (RT4) and is then fed via the first connection (A) of the first four-port direction separator (RT3) to the first fiber section (F1),
and are fed into the pump signals (γ1, γ2) using fourth connections (3₄, 4₄) of the four-port direction separators (RT3, RT4),
**characterized**
**in that** a pump signal (γ1, γ2) is fed into each of the four connections of the four-port direction separator (RT3, RT4) in such a manner that it is injected into the respective fiber amplifier (EDF1, EDF2) in the direction of the respective optical payload signal (α, β), and pumps this in the forward direction along the signal path of the optical payload signal (α, β) to be amplified.

5. Bidirectional optical amplifier according to Claim 3,
**characterized**
**in that** four-port direction separators (RT3, RT4) based on the beam splitter principle and each having a fourth connection (3₄, 4₄) are provided, via which the pump signals (γ1 γ2) in each case pump the fiber amplifiers (EDF1, EDF2) in the direction of the optical data signal (α, β).

6. Bidirectional optical amplifier according to one of the preceding claims,
**characterized**
**in that** multi-stage fiber amplifiers (EDF1, EDF2) are provided, which are also pumped in the opposite direction to the transmission direction of the optical user signal (α, β).

## Revendications

1. Amplificateur optique bidirectionnel, comprenant un premier séparateur directionnel (RT1) à la première borne (A) duquel un premier segment de fibre (F1) est connecté,
comprenant un second séparateur directionnel (RT2) à la première borne (B) duquel un second segment de fibre (F2) de la fibre de transmission (F1, F2) est connecté,
comprenant une première branche d'amplificateur contenant un amplificateur à fibre (EDF1) qui est située entre une deuxième borne (1₂) du premier séparateur directionnel (RT1) et une troisième borne (2₃) du second séparateur directionnel (RT2) et
amplifie un premier signal utile optique (α) amené à la première borne (A) du premier séparateur directionnel (RT1), lequel signal est injecté ensuite dans le second segment de fibre (F2) par le biais de la première borne (B) du second séparateur directionnel (RT2),
et comprenant une seconde branche d'amplificateur qui est située entre une deuxième borne (2₂) du second séparateur directionnel (RT2) et une troisième borne (1₃) du premier séparateur directionnel (RT1) et contient un second amplificateur à fibre (EDF2) qui amplifie un second signal
utile optique (β) amené à la première borne (B) du second séparateur directionnel (RT2), lequel signal est injecté ensuite dans le premier segment de fibre (F1) par le biais de la première borne (A) du premier séparateur directionnel (RT1),
et comprenant des dispositifs d'injection (WDM1, WDM2) pour l'alimentation de signaux de pompe (γ₁, γ₂),
**caractérisé en ce**
**qu'**un des dispositifs d'injection (WDM1, WDM2) est monté à chaque fois en aval des amplificateurs à fibre (EDF1, EDF2) et en ce que, grâce au séparateur directionnel (RT2, RT1) connecté à la sortie du dispositif d'injection (WDM1, WDM2), l'amplificateur à fibre (EDF2, EDF1) dans l'autre branche d'amplificateur est pompé à chaque fois dans la direction avant le long du trajet de signal du signal utile optique (α, β) à amplifier.

2. Amplificateur optique bidirectionnel selon la revendication 1,
**caractérisé en ce**
**que** le séparateur directionnel (RT1, RT2) est exécuté en tant que filtre de manière à ce que le signal de pompe respectif (γ₁, γ₂) soit alimenté dans l'autre branche d'amplificateur dans le sens contraire du signal utile optique amplifié.

3. Amplificateur optique bidirectionnel selon la revendication 1 ou 2,
**caractérisé en ce**
**que** l'on prévoit, en tant que dispositif d'injection, un multiplexeur de longueurs d'onde.

4. Amplificateur optique bidirectionnel comprenant un premier séparateur directionnel à quatre portes (RT3) à la première borne (A) duquel un premier segment de fibre (F1) est connecté,
comprenant un second séparateur directionnel à quatre portes (RT4) à la première borne (B) duquel un second segment de fibre (F2) est connecté,
comprenant un premier amplificateur à fibre (EDF1) qui est situé entre une deuxième borne (3₂) du premier séparateur directionnel à quatre portes (RT3) et une troisième borne (2₃) du second séparateur directionnel à quatre portes (RT4) et amplifie un premier signal utile optique (α) amené à la première borne (A) du premier séparateur directionnel à quatre portes (RT3), lequel signal est injecté ensuite dans le second segment de fibre (F2) par le biais de la première borne (B) du second séparateur directionnel à quatre portes (RT4),
comprenant un second amplificateur à fibre (EDF2) situé entre une deuxième borne (4₂) du second séparateur directionnel à quatre portes (RT4) et une troisième borne (3₃) du premier séparateur directionnel à quatre portes (RT3), qui amplifie un second signal utile optique (β) amené à la première borne (B) du second séparateur directionnel à quatre portes (RT4), lequel signal est injecté ensuite dans le premier segment de fibre (F1) par le biais de la première borne (A) du premier séparateur directionnel à quatre portes (RT3),
et comprenant des quatrièmes bornes (3₄, 4₄) des séparateurs directionnels à quatre portes (RT3, RT4) dans lesquelles des signaux de pompe (γ₁, γ₂) sont injectés,
**caractérisé en ce**
**qu'**un signal de pompe (γ₁, γ₂) est injecté à chaque fois dans les quatrièmes bornes des séparateurs directionnels à quatre portes (RT3, RT4) de manière à être alimenté à chaque fois dans l'amplificateur à fibre (EDF1, EDF2) dans la direction du signal utile optique (α, β) et à pomper l'amplificateur dans la direction avant le long du trajet de signal du signal utile optique (α, β) à amplifier.

5. Amplificateur optique bidirectionnel selon la revendication 3,
**caractérisé en ce**
**que** l'on prévoit des séparateurs directionnels à quatre portes (RT3, RT4) suivant le principe des diviseurs de faisceau, pourvus à chaque fois d'une quatrième borne (3₄, 4₄) par le biais de laquelle les signaux de pompe (γ₁, γ₂) pompent les amplificateurs à fibre (EDF1, EDF2) à chaque fois dans la direction du signal de données optique (α, β).

6. Amplificateur optique bidirectionnel selon l'une des revendications précédentes,
**caractérisé en ce**
**que** l'on prévoit des amplificateurs à fibre à plusieurs étages (EDF1, EDF2) qui sont pompés, en plus, dans le sens contraire du sens de transmission du signal utile optique (α, β).
